# DEMANDE DE BREVET EUROPEEN

(11) **EP 1 498 653 A1**
(43) Date de publication de la demande: **19.01.2005**
(21) Numéro de dépôt: 04356128.1
(22) Date de dépôt: 07.07.2004
(51) Int. Cl.: F16L 33/207

(54) **Raccord à compression pour tubes multicouches**

(30) Priorité: 15.07.2003 FR 0308617
(71) Demandeur: COMAP, 69008 Lyon (FR)
(72) Inventeur: Tuffe, Stéphane, 69740 Genas (FR)
(74) Mandataire: Maureau, Philippe

(57) **Abrégé**

Dispositif de raccordement de deux tubes notamment de type multicouches, le diamètre extérieur du premier tube (3) étant égal au diamètre intérieur du second tube (4), caractérisé en ce qu'il comporte :
- une souche (2) et,
- une bague de sertissage (16),
la souche (2) comportant une portion tubulaire (8) de diamètre extérieur sensiblement égal au diamètre intérieur du premier tube (3), la paroi extérieure (9) de la portion tubulaire (8) comportant au moins un cran (10) par exemple en dent de sapin destiné à coopérer avec la paroi intérieure (12) du premier tube (3) pour le maintien en position de celui-ci par rapport à la souche (2), la souche (2) étant destinée à être emboîtée dans le premier tube (3), le second tube (4) étant destiné à être emboîté sur le premier tube (3), la bague de sertissage (16) étant destiné à être emboîtée sur le second tube (4), et la zone de recouvrement des deux tubes (3, 4), correspondant sensiblement à la longueur de la portion tubulaire (8) de la souche (2), étant destinée à être sertie.

## Description

La présente invention concerne un dispositif pour le raccordement de deux tubes notamment de type multicouches.

Un tube de type multicouches est constitué de façon connue de trois couches de matériaux différents, la couche centrale étant métallique et les couches extérieures étant en matière synthétique. Ce type de tube est commercialisé en plusieurs tailles standard, chaque taille présentant la particularité de présenter un diamètre intérieur correspondant au diamètre extérieur de la taille inférieure.

Pour raccorder un premier tube à un second tube de diamètre intérieur correspondant au diamètre extérieur du premier tube, il est connu d'utiliser un raccord droit réducteur. Ce raccord comprend une souche comportant deux embouts. Chaque tube est raccordé à un embout de la souche, l'étanchéité à l'intérieur de chaque tube étant assurée par un ou deux joints sur chaque embout de la souche. Le raccord comprend également deux bagues de sertissages et deux bagues de positionnement : une bague de sertissage métallique et une bague de positionnement en matière synthétique étant emboîtées de façon concentrique sur l'extrémité de chaque tube. Chaque bague de positionnement permet le maintien en position de la bague de sertissage correspondante, le positionnement de la mâchoire de sertissage, ainsi que la détection du bon emboîtement du tube.

Ce mode de raccordement nécessite l'utilisation d'un nombre important de pièces dont une souche, deux bagues de sertissages et deux bagues de positionnement.

Le problème technique posé est de fournir un dispositif de raccordement comportant un nombre de pièce restreint.

A cet effet, la présente invention a pour objet un dispositif de raccordement de deux tubes notamment de type multicouches, le diamètre extérieur du premier tube étant égal au diamètre intérieur du second tube, caractérisé en ce qu'il comporte :
- une souche et,
- une bague de sertissage,
la souche comportant une portion tubulaire de diamètre extérieur sensiblement égal au diamètre intérieur du premier tube, la paroi extérieure de la portion tubulaire comportant au moins un cran par exemple en dent de sapin destiné à coopérer avec la paroi intérieure du premier tube pour le maintien en position de celui-ci par rapport à la souche, la souche étant destinée à être emboîtée dans le premier tube, le second tube étant destiné à être emboîté sur le premier tube, la bague de sertissage étant destiné à être emboîtée sur le second tube, la zone de recouvrement des deux tubes, correspondant sensiblement à la longueur de la souche, étant destinée à être sertie, et la souche comprenant un épaulement extérieur ménagé à l'extrémité de la portion tubulaire, dont le diamètre extérieur est sensiblement égal au diamètre interne du second tube

Avantageusement, la paroi extérieure de la portion tubulaire comporte au moins une gorge dans laquelle est logé un joint d'étanchéité.

La disposition de la souche unique permet de réaliser un montage simple. Une seule bague de sertissage est utilisée. La présence de la souche dans la zone de recouvrement permet d'éviter l'écrasement des tubes lors du sertissage. L'épaulement permet un positionnement précis de la souche par rapport au premier tube.

Avantageusement, un joint d'étanchéité est logé dans l'espace ménagé entre l'épaulement extérieur de la souche, la paroi extérieure de la portion tubulaire de la souche, la paroi intérieure du second tube et l'extrémité du premier tube.

Avantageusement, une butée est présente sur la paroi extérieure de la portion tubulaire de la souche en avant de l'épaulement, destinée à prendre appui sur l'extrémité du premier tube au niveau de la couche intérieure de celui-ci, de façon à éviter le contact entre la couche métallique centrale du premier tube à l'extrémité de celui-ci et l'épaulement de la souche.

Selon un autre mode de réalisation, la souche comporte une seconde portion tubulaire ménagée au delà de l'épaulement, dont le diamètre externe est sensiblement égal au diamètre interne du second tube et comportant au moins un cran par exemple en dent de sapin destiné à coopérer avec la paroi intérieure du second tube pour le maintien en position de celui-ci par rapport à la souche et au moins une gorge annulaire dans lequel est logé un joint d'étanchéité.

Avantageusement, la bague de sertissage comporte des moyens de marquage repérant la longueur de la souche permettant la mesure de la zone de recouvrement entre le premier tube et le second tube.

L'invention sera mieux comprise à l'aide de la description qui suit, en référence au dessin schématique annexé représentant des formes d'exécution du dispositif de raccordement à sertir pour tube multicouches.

La figure 1 en est une vue en coupe transversale selon un premier mode de réalisation.

La figure 2 en est une vue en coupe transversale selon un second mode de réalisation.

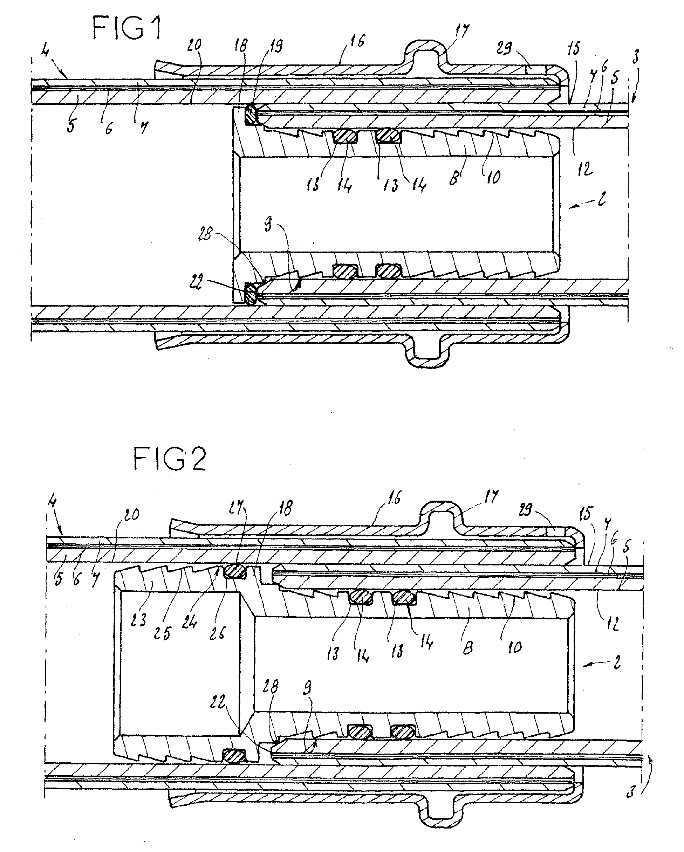

Selon un premier mode de réalisation représenté sur la figure 1, la souche 2 selon l'invention est destinée au raccordement de deux tubes, le diamètre extérieur du premier tube 3 étant égal au diamètre intérieur du second tube 4.

Chaque tube 3, 4 comprend trois couches concentriques :
- une première couche 5 intérieure en matière synthétique, pouvant être du polyéthylène réticulé,
- une seconde couche 6 métallique, pouvant être de l'aluminium,
- une troisième couche 7 extérieure en matière synthétique, pouvant être du polyéthylène réticulé ou du polyéthylène haute densité.

Chaque tube comprend de plus deux couches d'adhésif non représentées situées de part et d'autre de la couche métallique 6.

La souche 2 peut être réalisée en laiton par exemple.

La souche 2 comporte une portion tubulaire 8 de diamètre extérieur sensiblement égal au diamètre intérieur du premier tube 3.

Les tubes multicouches sont commercialisés en plusieurs tailles standard, chaque taille présentant la particularité de présenter un diamètre intérieur correspondant au diamètre extérieur de la taille inférieure.

A titre d'exemple, le diamètre intérieur du second tube 4 peut prendre les valeurs suivantes : 26, 20, 16, 14 mm et le diamètre extérieur du premier tube 3 peut prendre des valeurs identiques.

La paroi extérieure 9 de la portion tubulaire 8 comporte des crans 10 en dent de sapin pour le maintien du premier tube 3. Les crans 10 sont destinés à fournir un effet anti-retour empêchant la sortie de la souche 2 du premier tube 3 en coopérant avec la paroi intérieure 12 du premier tube 3.

Deux gorges annulaires 13 de profil rectangulaire sont également ménagées dans la paroi extérieure 9 de la portion tubulaire 8 permettant de loger deux joints d'étanchéité 14.

La souche 2 est destinée à être emboîtée dans le premier tube 3, puis le second tube 4 est destiné à être emboîté sur le premier tube 3, la zone de recouvrement des deux tubes correspondant à la longueur de la portion tubulaire 8 de la souche 2.

Pour assurer un recouvrement précis, un marquage est effectué lors de l'emboîtement de la souche dans le premier tube permettant de repérer sur la paroi extérieure 15 du premier tube 3 la position de l'extrémité de la souche 2. Cette opération peut être réalisée au moyen d'un gabarit ou par simple mesure de la longueur de la souche, ou par la mise en place d'un repère visuel ou d'une encoche sur le premier tube 3.

La zone de recouvrement est destinée à être sertie, une bague de sertissage métallique 16 est rapportée sur l'extrémité du second tube 4, cette bague 16 comportant une bague de positionnement 17 constituée par un bourrelet extérieur ménagé sur la paroi de la bague 16 correspondant à la partie femelle d'une pince à sertissage et permettant de positionner celle-ci.

La bague de sertissage 16 peut comporter des moyens de marquage permettant de visualiser la longueur de la souche.

La souche 2 fournit un support pour le sertissage évitant ainsi l'écrasement des tubes.

Il est également possible de réaliser une bague de sertissage comportant un marquage correspondant à la longueur de la souche 2.

L'étanchéité entre les deux tubes est réalisée par contact de la couche intérieure 5 du second tube 4 avec la couche extérieure 7 du premier tube 3.

La souche 2 comprend en plus de la portion tubulaire 8, un épaulement extérieur 18 ménagé à l'extrémité de la portion tubulaire 8, dont le diamètre extérieur est sensiblement égal au diamètre interne du second tube 4. Un joint d'étanchéité 19 est logé dans l'espace ménagé entre l'épaulement extérieur 18, la partie de la paroi extérieure 9 de la portion tubulaire 8 située entre la butée 28 et l'épaulement 18, la paroi intérieure du second tube 20 et l'extrémité du premier tube 22.

Le joint 19 est comprimé entre la partie de la paroi extérieure 9 de la portion tubulaire 8 située entre la butée 28 et l'épaulement 18 d'une part, et la paroi intérieure du second tube 20 d'autre part.

Le joint d'étanchéité 19 et l'épaulement 18 permettent respectivement d'assurer une meilleure étanchéité et une tenue mécanique.

Selon un second mode de réalisation représenté sur la figure 3, la souche 2 comporte en plus de la portion tubulaire 8 et de l'épaulement 18 une seconde portion tubulaire 23 ménagée au delà de l'épaulement 18, dont le diamètre externe est sensiblement égal au diamètre interne du second tube 4.

Cette seconde portion tubulaire 23 comporte sur sa paroi extérieure 24 des crans 25 en dent de sapin pour le maintien du second tube 4 et une gorge annulaire 26 de profil rectangulaire dans lequel est logé un joint d'étanchéité 27.

Les crans 25 sont destinés à fournir un effet anti-retour empêchant la sortie de la souche 2 du second tube 4 en coopérant avec la paroi intérieure 20 du second tube 4.

Dans ce mode de réalisation il n'y a pas de joint situé dans l'espace ménagé entre l'épaulement extérieur 18, la portion tubulaire 8, la paroi intérieure du second tube 20 et l'extrémité du premier tube 22.

L'étanchéité est assurée par les deux joints 27. D'autre part, la présence des crans 25 en forme de dent de sapin permet de garantir le maintien en position du second tube.

D'autre part, une butée 28 est ménagée sur la portion tubulaire 8 en avant de l'épaulement 18, destinée à prendre appui sur l'extrémité 22 du premier tube au niveau de la couche intérieure 5 de façon à éviter le contact entre la couche métallique 6 du premier tube 3 à l'extrémité 22 de celui-ci et l'épaulement 18 de la souche. En effet, le contact entre la couche métallique 6 à l'extrémité du premier tube 22 et l'épaulement 18 de la souche 2 peut entraîner la formation d'un couple galvanique qui cause des détériorations des parties métalliques.

Un orifice de visualisation 29 est ménagé dans la paroi de la bague 16 à proximité de l'extrémité en regard de l'extrémité du second tube 4 lorsque la bague 16 est emboîtée sur celui-ci. Cet orifice permet de vérifier que le second tube 4 est emboîté complètement dans la bague 16.

L'invention ne se limite pas aux formes d'exécution décrites, elle en embrasse au contraire toutes les variantes. C'est ainsi notamment que le nombre ainsi que la disposition des gorges annulaires peuvent varier. La nature des couches des tubes et de matériaux utilisés pour la souche peut également être différente.

## Revendications

1. Dispositif de raccordement de deux tubes notamment de type multicouches, le diamètre extérieur du premier tube (3) étant égal au diamètre intérieur du second tube (4), **caractérisé en ce qu'**il comporte :
- une souche (2) et,
- une bague de sertissage (16),
la souche (2) comportant une portion tubulaire (8) de diamètre extérieur sensiblement égal au diamètre intérieur du premier tube (3), la paroi extérieure (9) de la portion tubulaire (8) comportant au moins un cran (10) par exemple en dent de sapin destiné à coopérer avec la paroi intérieure (12) du premier tube (3) pour le maintien en position de celui-ci par rapport à la souche (2), la souche (2) étant destinée à être emboîtée dans le premier tube (3), le second tube (4) étant destiné à être emboîté sur le premier tube (3), la bague de sertissage (16) étant destiné à être emboîtée sur le second tube (4), la zone de recouvrement des deux tubes (3, 4), correspondant sensiblement à la longueur de la portion tubulaire (8) de la souche (2), étant destinée à être sertie, et la souche comprenant un épaulement extérieur (18) ménagé à l'extrémité de la portion tubulaire (8), dont le diamètre extérieur est sensiblement égal au diamètre interne du second tube (4).

2. Dispositif selon la revendication 1, **caractérisé en ce que** la paroi extérieure (9) de la portion tubulaire (8) comporte au moins une gorge (13) dans laquelle est logé un joint d'étanchéité (14).

3. Dispositif selon l'une des revendications 1 ou 2, **caractérisé en ce qu'**un joint d'étanchéité (19) est logé dans l'espace ménagé entre l'épaulement extérieur (18) de la souche (2), la paroi extérieure (9) de la portion tubulaire (8) de la souche (2), la paroi intérieure (20) du second tube (4) et l'extrémité (22) du premier tube (3).

4. Dispositif selon l'une des revendications 1 à 3, **caractérisé en ce qu'**une butée (28) est présente sur la paroi extérieure (9) de la portion tubulaire (8) de la souche (2) en avant de l'épaulement (18), destinée à prendre appui sur l'extrémité (22) du premier tube (3) au niveau de la couche intérieure (5) de celui-ci, de façon à éviter le contact entre la couche métallique (6) centrale du premier tube (3) à l'extrémité (22) de celui-ci et l'épaulement (18) de la souche (2).

5. Dispositif selon l'une des revendications 1 à 4, **caractérisé en ce que** la souche (2) comporte une seconde portion tubulaire (23) ménagée au delà de l'épaulement (18), dont le diamètre externe est sensiblement égal au diamètre interne du second tube (4) et comportant au moins un cran (25) par exemple en dent de sapin destiné à coopérer avec la paroi intérieure (20) du second tube (4) pour le maintien en position de celui-ci par rapport à la souche (2) et au moins une gorge annulaire (26) dans lequel est logé un joint d'étanchéité (27).

6. Dispositif selon l'une des revendication 1 à 5, **caractérisé en ce que** la bague de sertissage (16) comporte des moyens de marquage repérant la longueur de la portion tubulaire (8) de la souche (2) permettant la mesure de la zone de recouvrement entre le premier tube (3) et le second tube (4).
